## Europäisches Patentamt

## European Patent Office

## Office européen des brevets

(11) Veröffentlichungsnummer: **0 088 918**

**A2**

(12) # EUROPÄISCHE PATENTANMELDUNG

(21) Anmeldenummer: 83101799.1

(22) Anmeldetag: 24.02.83

(51) Int. Cl.³: **C 08 J 3/16**
C 08 J 3/06
//(C08J3/16, C08L23/04),
(C08J3/06, C08L23/04)

(30) Priorität: 04.03.82 DE 3207744

(43) Veröffentlichungstag der Anmeldung:
21.09.83 Patentblatt 83/38

(84) Benannte Vertragsstaaten:
BE DE FR GB IT NL

(71) Anmelder: Ruhrchemie Aktiengesellschaft
Bruchstrasse 219
D-4200 Oberhausen 13(DE)

(72) Erfinder: Hobes, John, Dr. Dipl.-Chem.
Theodor-Storm-Strasse 4
D-4220 Dinslaken(DE)

(72) Erfinder: Deymann, Detlef
Süthers Garten 3 - 5
D-4300 Essen I.(DE)

(74) Vertreter: Reichelt, Karl-Heinz, Dr.
m. Br. Ruhrchemie Aktiengesellschaft Abt. PLD Postfach
13 01 60
D-4200 Oberhausen 13(DE)

(54) Verfahren zur Herstellung rieselfähiger Homo- oder Copolymerwachse des Ethylens.

(57) Die Erfindung betrifft die Herstellung rieselfähiger Homo- und Copolymerwachse durch Erhitzen der festen oder geschmolzenen Wachse in wässriger Ammoniaklösung.

EP 0 088 918 A2

Oberhausen 13, 01.03.1982
PLD rcht-sei    R 1924

**0088918**

Ruhrchemie Aktiengesellschaft, Oberhausen 13

Verfahren zur Herstellung rieselfähiger Homo- oder
Copolymerwachse des Ethylens

Die vorliegende Erfindung betrifft ein Verfahren zur
Herstellung rieselfähiger Homo- oder Copolymerwachse des
Ethylens durch Erhitzen der festen oder geschmolzenen
Wachse und Rühren in wässriger Ammoniaklösung.

Es sind bereits verschiedene Verfahren bekannt, Wachse
aus der Schmelze oder dem festen Zustand in pulverförmige bis körnige Produkte überzuführen. Dies kann durch
Versprühen oder Verdüsen der Schmelze oder durch
Pastillieren, Verschuppen, Lösen und anschließendes
Fällen sowie durch Streifengranulierung der festen
Wachse geschehen. Die genannten Arbeitsweisen sind
technisch sehr aufwendig und stehen einer wirtschaftlichen Erzeugung des rieselfähigen Materials entgegen.
Hinzu kommt, daß insbesondere feinteilige Copolymerwachse zum Zusammenklumpen neigen.

Es bestand daher die Aufgabe, ein Verfahren zu entwickeln, das es gestattet, sowohl Homo- als auch Copolymerwachse des Ethylens in einfacher Weise in rieselfähige,
nichtbackende Teilchen überzuführen. Erfindungsgemäß
wird diese Aufgabe gelöst durch ein Verfahren zur Herstellung rieselfähiger Homo- oder Copolymerwachse des

- 2 -

Ethylens. Es ist dadurch gekennzeichnet, daß man die
festen oder geschmolzenen Wachse in wässriger Ammoniaklösung suspendiert, diese Suspension unter Rühren auf
Temperaturen dicht unterhalb des Schmelzbereichs der
Wachse erhitzt und unter Erhitzen weiterrührt.

Nach der neuen Arbeitsweise können die verschiedensten
Homo- und Copolymerwachse des Ethylens in feinteilige
Form überführt werden. Geeignet sind Ausgangsstoffe mit
Viskositäten zwischen 100 und 10 000 mPas (gemessen bei
140°C im Rotationsviskosimeter). Als Copolymerwachse
kommen z.B. Polymerisate des Ethylens mit Vinylacetat,
Vinylacetamid, Acrylsäure und Methacrylsäure sowie
Ester und Amide der Acrylsäure und der Methacrylsäure
in Betracht. Die Copolymerisate können neben Ethylen
ein oder mehr der vorstehend aufgeführten Monomeren
enthalten. Typische Beispiele für derartige Copolymerwachse sind Copolymerisate aus Ethylen und Vinylacetat,
Ethylen und Vinylmethylacetamid, Ethylen und Acrylsäure, Ethylen, Acrylsäure und Acrylsäure-t-butylester.

Die Wachse werden in festem, zweckmäßig zerkleinertem
Zustand oder geschmolzen in wässriger Ammoniaklösung
suspendiert. Dabei empfiehlt es sich, ein Volumverhältnis von geschmolzenem Wachs und wässriger Ammoniaklösung von 1 : 1 bis 1 : 20 und insbesondere von 1 : 2
bis 1 : 5 einzuhalten. Die Konzentration der wässrigen
Ammoniaklösung kann über weite Bereiche variiert werden.
So lassen sich sowohl 0,5 als auch 25 %ige Lösungen
verwenden. Die Länge der Behandlungsdauer wird vom
Siedepunkt und damit der Konzentration der Ammoniaklösung
beeinflußt. Höherkonzentrierte Lösungen, die einen niedrigen Siedepunkt haben (der im Verlauf des Erhitzens durch Ammoniakverlust ansteigt), erfordern
daher eine längere Behandlungszeit als niederkonzentrierte Lösungen mit einem höheren Siedepunkt. Dementsprechend variiert der Zeitaufwand für die Herstellung
feinteiliger Produkte zwischen mehreren Stunden und 5
bis 15 Minuten.

Nach einer besonderen Ausführungsform des erfindungsgemäßen Verfahrens setzt man der Ammoniaklösung 0,1 bis
1 Gew.% Emulgator (bezogen auf die Lösung) als Suspensionshilfsmittel zu. Geeignete Emulgatoren sind die
handelsüblichen kapillaraktiven Verbindungen wie Seifen,
Fettalkoholsulfate, Alkyl- und/oder Arylsulfonate. Sie
werden üblicherweise als Einzelsubstanzen verwendet,
können jedoch auch als Gemische eingesetzt werden.

Eine erhebliche Bedeutung für die Ausbildung der Teilchengröße hat die Rührgeschwindigkeit. Sie ist abhängig von
der Art des Wachses und darüber hinaus von der Reaktor-
und der Rührflügelgeometrie und muß von Reaktor zu
Reaktor individuell eingestellt werden. Allgemein gilt,
daß bei gleichdimensionierten Reaktoren zunehmende Rührgeschwindigkeit zu kleineren Teilchen führt und daß
größere Reaktoren eine niedrigere Rührgeschwindigkeit
erfordern als kleinere Reaktoren, um Teilchen gleicher
Größe zu erhalten.

Die praktische Durchführung des neuen Verfahrens erfolgt in Rührkesseln. Wachs wird in zerkleinertem oder
geschmolzenem Zustand in die vorgelegte Ammoniaklösung
eingetragen. Daraufhin wird die Suspension auf Temperaturen, die etwa 2 bis etwa $10^{\circ}$ unterhalb des Schmelzbereichs des Wachses liegt, erhitzt. Unter dem Begriff
Schmelzbereich wird hierbei dasjenige Temperaturgebiet
verstanden, in dem das Wachs vom festen in den geschmolzenen Zustand übergeht. Üblicherweise erstreckt
sich dieser Bereich über mehrere $^{\circ}$C. Das Aufheizen
erfolgt unter Rühren. Ist die gewünschte Temperatur
erreicht, rührt man weiter, bis das gesamte Wachs in
feine Partikel zerteilt ist. Anschließend wird unter
Rühren auf Raumtemperatur abgekühlt. Das fertige Produkt wird durch Filtration isoliert, es wird gewaschen
und getrocknet. Der Abkühlvorgang kann dadurch umgangen werden, daß man die heiße Suspension aus Ammoniaklösung und Wachs möglichst schnell unter Rühren in
Eiswasser einleitet. Das Reaktionsprodukt wird in Form
kleiner Kugeln erhalten. Diese Variante empfiehlt sich
insbesondere bei Polymerwachsen, deren Teilchen leicht
zusammenbacken. Um die Backneigung weiter herabzusetzen,
empfiehlt es sich, dem Eiswasser 0,1 bis 0,5 Gew.%
Talkum (bezogen auf das Eiswasser) zuzusetzen.

In den nachfolgenden Beispielen wird das neue Verfahren
erläutert.

Beispiel 1

In einem mit Rührer, Rückflußkühler und Kontaktthermometer versehenen 2 l-Dreihalskolben werden 150 g
Ethylen-Vinylacetat-Wachs mit einem Vinylacetatgehalt
von 10,9 Gew.% (Tropfpunkt: $95^{\circ}$C, Viskosität 140:
1200 mPas) und 850 g 25 %ige wässrige $NH_3$-Lösung vorgelegt.

Das Gemisch wird unter Rühren auf 95°C erwärmt und bei dieser Temperatur 15 Minuten weitergerührt. Hierbei zerfällt die Wachsschmelze in feine Kügelchen. Man läßt unter Rühren mit einer Geschwindigkeit von 300 U/Min auf 20°C abkühlen und erhält nach Filtration und Trocknung ein kugelförmiges Wachs mit einer Teilchengröße von 0,5 - 4 mm.

Beispiel 2

In einem mit Rührer, Rückflußkühler und Kontaktthermometer versehenen 6 1-Dreihalskolben werden 500 g Ethylen-Vinylacetat-Wachs mit einem Vinylacetatgehalt von 26,5 Gew.% (Tropfpunkt: 85°C, Viskosität 140: 1660 mPas) und 2500 g 2 %ige wässrige $NH_3$-Lösung vorgelegt.

Das Gemisch wird unter Rühren auf 60°C erwärmt und bei dieser Temperatur 10 min. weitergerührt. Hierbei zerfällt das Wachs in feine Kügelchen. Unter Rühren mit einer Geschwindigkeit von 150 U/min. wird auf 20°C abgekühlt. Man erhält nach Filtration Waschen und Trocknen im Umlufttrockenschrank das Wachs in Form kleiner Kugeln mit einem Durchmesser von 3 - 4 mm. Um ein Zusammenbacken der klebrigen Wachsperlen zu verhindern, setzt man dem Waschwasser 0,25 % Talkum zu.

Beispiel 3

In einem mit Rührer, Rückflußkühler und Kontaktthermometer versehenen 2 1-Dreihalskolben werden 150 g Ethylen-Vinylacetat-Wachs mit einem Vinylacetatgehalt von 10,9 Gew.% (Tropfpunkt: 95°C, Viskosität 140: 1200 mPas), 850 g 25 %ige wässrige $NH_3$-Lösung und 1,5 g Natriumlauroylsulfat vorgelegt.

Der Ansatz wird unter Rühren auf 95°C erwärmt und bei dieser Temperatur 15 min. weitergerührt. Hierbei zerfällt die Wachsschmelze in feine Kügelchen. Man läßt unter Rühren mit einer Geschwindigkeit von 800 U/min. abkühlen und erhält nach Filtration, Waschen mit $H_2O$ und Trocknen im Umlufttrockenschrank ein linsenförmiges Wachs mit einer Korngröße von 0,5 - 8 mm.

Beispiel 4

In einem mit Blattrührer, Thermometer, Rückflußkühler und Strömungsbrecher versehenen 10 l-Glasreaktor werden 1200 g Ethylen-Vinylacetat-Wachs mit einem Vinylacetatgehalt von 15,3 Gew.% (Tropfpunkt: 89°C, Viskosität 140: 1850 mPas), 6000 g 25 %ige wässrige $NH_3$-Lösung und 1,2 g Na-Lauroylsulfat vorgelegt.

Das Gemisch wird unter Rühren auf 90°C erwärmt. Nach Erreichen dieser Temperatur zerfällt die Wachsschmelze in perlförmige Teilchen. Man läßt unter Rühren mit einer Geschwindigkeit von 150 U/min. auf 20°C abkühlen und erhält nach Filtration, Waschen und Trocknen im Umlufttrockenschrank gleichmäßige kugelförmige Teilchen eines Durchmessers von 1 - 2 mm.

Beispiel 5

In einem mit Rührer, Rückflußkühler und Kontaktthermometer versehenen 2 l-Dreihalskolben werden 150 g Polyethylenwachs (Tropfpunkt: 106°C, Viskosität 140: 680 mPas) und 850 g 25 %ige wässrige $NH_3$-Lösung vorgelegt.

Das Gemisch wird unter Rühren auf 95°C erhitzt. Nach 15 min. Rühren bei dieser Temperatur ist die Bildung feiner Teilchen aus dem Wachs beendet. Das kugelförmige Reaktionsprodukt wird unter Rühren heiß in Eiswasser abgelassen. Nach Filtration und Trocknen erhält man gleichmäßige kugelförmige Teilchen mit einem Durchmesser von 1 - 2 mm.

### Beispiel 6

In einem mit Rührer, Rückflußkühler und Kontaktthermometer versehenen 2 l-Dreihalskolben werden 150 g Ethylen-Vinylmethylacetamid-Copolymerwachs mit einem Vinylmethylacetamidgehalt von 8,4 Gew.% (Tropfpunkt: 92°C, Viskosität 140: 420 mPas) und 850 g 10 %ige wässrige $NH_3$-Lösung vorgelegt.

Das Gemisch wird unter Rühren auf 60°C erhitzt. Nach 10 min. zerfällt die Polymerschmelze in feine Kugeln. Nach Abkühlung, Filtration und Trocknen wird ein gleichmäßiges, perlförmiges Produkt mit einem Teilchendurchmesser von 1 mm erhalten.

### Beispiel 7

In einem mit Rührer, Rückflußkühler und Kontaktthermometer versehenen 2 l-Dreihalskolben werden 150 g Ethylen-Acrylsäure-Copolymerwachs mit einem Acrylsäuregehalt von 4,7 Gew.% (Tropfpunkt: 97°C, Viskosität 140: 1000 mPas) und 850 g 25 %ige wässrige $NH_3$-Lösung vorgelegt.

Das Gemisch wird 1 Stunde bei 60°C und weitere 2 Stunden bei 95°C gerührt. Das Copolymerwachs zerfällt hierbei in ein Pulver. Nach Aufarbeitung erhält man ein sehr feines Material, das unter dem Mikroskop Kugelstruktur mit einem Teilchendurchmesser von 10 bis 40 /u aufweist.

## Beispiel 8

In einem mit Rührer, Rückflußkühler und Kontaktthermometer versehenen 2 1-Kolben werden 150 g eines Ethylen-Acrylsäure-Acrylsäure-t-butylester-Terpolymerwachs mit einem Gehalt von 4,9 Gew.% Acrylsäure und 5,6 Gew.% Acrylsäureester (Tropfpunkt: 94°C, Viskosität 140: 730 mPas) und 850 g 25 %ige wässrige Ammoniaklösung vorgelegt.

Das Gemisch wird eine Stunde bei 50°C und weitere 2 Stunden bei 95°C gerührt. Das Terpolymerwachs zerfällt hierbei in ein Pulver. Man erhält nach der Aufarbeitung sehr feine, kugelförmige Partikel gleichmäßigen Teilchendurchmessers von etwa 50 µu.

## Beispiel 9

In einem mit Rührer, Rückflußkühler und Kontaktthermometer versehenen 2 1-Dreihalskolben werden 150 g Ethylen-Acrylsäure-Copolymerwachs mit einem Gehalt von 31,5 Gew.% Acrylsäure (Tropfpunkt: 83°C, Viskosität 140: 2750 mPas), 850 g Wasser und 1,5 g Alkansulfonat vorgelegt.

Der Ansatz wird unter Rühren auf 95°C erhitzt, wobei nach 10 min. die Wachsschmelze in Kugeln zerfällt. Man läßt das Gemisch unter Rühren heiß in Eiswasser ab, das 0,25 Gew.% Talkum enthält. Nach Filtration und Trocknung werden gleichmäßige kugelförmige Teilchen mit einem Durchmesser von 2 mm erhalten, die zwar weich sind, aber nicht zum Zusammenbacken neigen.

Oberhausen 13, 01.03.1982
PLD rcht-sei      R 1924

Ruhrchemie Aktiengesellschaft, Oberhausen 13


Patentansprüche


1.) Verfahren zur Herstellung rieselfähiger Homo- oder Copolymerwachse des Ethylens, dadurch gekennzeichnet, daß man die festen oder geschmolzenen Wachse in wässriger Ammoniaklösung suspendiert, diese Suspension unter Rühren auf Temperaturen dicht unterhalb des Schmelzbereichs der Wachse erhitzt und unter Erhitzen weiter rührt.


2.) Verfahren nach Anspruch 1, dadurch gekennzeichnet, daß die Ammoniaklösung 0,1 bis 1 Gew.% Emulgator (bezogen auf die Lösung) enthält.